## Europäisches Patentamt

## European Patent Office

## Office européen des brevets

(19)

(11) Veröffentlichungsnummer: **0 100 941**
**B1**

(12)

# EUROPÄISCHE PATENTSCHRIFT

(45) Veröffentlichungstag der Patentschrift:
**29.10.86**

(21) Anmeldenummer: **83107170.9**

(22) Anmeldetag: **21.07.83**

(51) Int. Cl.⁴: **G 21 C 19/34**

(54) **Verfahren zum Aufarbeiten eines Kernreaktorbrennstabes.**

(30) Priorität: **03.08.82 DE 3228979**

(43) Veröffentlichungstag der Anmeldung:
**22.02.84 Patentblatt 84/8**

(45) Bekanntmachung des Hinweises auf die Patenterteilung:
**29.10.86 Patentblatt 86/44**

(84) Benannte Vertragsstaaten:
**DE FR GB**

(56) Entgegenhaltungen:
**BE - A - 567 254**
**DE - A - 1 589 815**
**FR - A - 2 080 952**
**FR - A - 2 373 859**
**FR - A - 2 485 396**
**GB - A - 2 073 476**
**US - A - 4 296 074**

(73) Patentinhaber: **ALKEM GMBH, Postfach 110069,
D-6450 Hanau 11 (DE)**

(72) Erfinder: **Stoll, Wolfgang, Dr., Ameliastrasse 25,
D-6450 Hanau (DE)**
Erfinder: **Ennerst, Karl, Hirschpfad 23,
D-8752 Kleinostheim (DE)**

(74) Vertreter: **Mehl, Ernst, Dipl.-Ing. et al, Postfach 22 01 76,
D-8000 München 22 (DE)**

## Beschreibung

Die Erfindung betrifft ein Verfahren zum Aufarbeiten eines Kernreaktorbrennstabes, welcher Kernbrennstoff in einem Hüllrohr enthält, durch Entfernen des Hüllrohres vom Kernbrennstoff.

Ein derartiges Verfahren ist aus der GB-A 1 097 597 bekannt. Der nach diesem Verfahren aufzuarbeitende Kernreaktorbrennstab weist ein Hüllrohr aus einer Magnesiumlegierung auf, in dem sich ein Uran-Metallkörper als Kernbrennstoff befindet. Das Hüllrohr wird in einer Schredderanlage mit elektrischem Hochfrequenzstrom erwärmt, dadurch geweitet und aufgeweicht und schliesslich mit Schredderzylindern vom Uran-Metallkörper abgespant. Der Brennstab befindet sich hierbei in der Schredderanlage mit der Mantelfläche seines Hüllrohres zwischen zwei achsparallelen Schredderzylindern, die auf ihrem Aussenmantel Schneidezähne aufweisen und die entlang der Längsachse des sich um diese Längsachse drehenden Brennstabes geführt werden. Nach dem Entfernen des Hüllrohres in der Schredderanlage wird der Uran-Metallkörper chemisch weiterbehandelt.

Insbesondere da sich bestrahlte Brennstäbe irregulär verformt haben, kann nicht ausgeschlossen werden, dass auch Hüllrohrwerkstoff zusammen mit dem Uran-Metallkörper der chemischen Weiterbehandlung zugeführt wird. Es kann aber auch Kernbrennstoff an den Spänen haften bleiben, die beim Abspanen des Hüllrohres entstehen und die nur unter grossem Aufwand von dem Kernbrennstoff getrennt werden können.

Durch die Erfindung wird die Aufgabe gelöst, das Hüllrohr eines Kernreaktorbrennstabes vom Kernbrennstoff so zu entfernen, dass sich zumindest im vom Hüllrohr getrennten Kernbrennstoff kein Hüllrohrwerkstoff mehr befindet.

Zur Lösung dieser Aufgabe ist ein Verfahren der eingangs erwähnten Art erfindungsgemäss dadurch gekennzeichnet, dass das Hüllrohr in gasdicht verschlossenem Zustand zusammen mit dem in ihm befindlichen Kernbrennstoff gleichmässig so stark aufgeheizt wird, dass sich der Durchmesser des Hüllrohres unter Vergrössern des Abstandes zwischen dem Kernbrennstoff und dem Hüllrohr ohne Rissbildung im Hüllrohr bleibend aufweitet, dass anschliessend das aufgeweitete Hüllrohr an einem Ende geöffnet wird und dass schliesslich der Kernbrennstoff aus dem geöffneten Hüllrohr ausgetragen und vom Hüllrohr getrennt weiterbehandelt wird.

Das Aufweiten des aus Metall bestehenden Hüllrohres wird beim Aufheizen durch Erhöhen des Gasdruckes von Gasen unterstützt, die sich im gasdicht verschlossenen Hüllrohr befinden und mit aufgeheizt werden. Im Falle von bestrahlten Kernreaktorbrennstäben, die beispielsweise von in einem Kernreaktor abgebrannten Kernreaktorbrennelementen stammen, können diese aufgeheizten Gase gasförmige Spaltprodukte sein.

Durch das bleibende Aufweiten des Hüllrohres werden Verbindungsstellen zwischen dem Kernbrennstoff und der Hüllrohrinnenwand, die durch Verbacken entstanden sein können, getrennt, und sogar oxidischer, d.h. keramischer Kernbrennstoff, wie z.B. aus $(U/Pu)O_2$-Mischkristallen bestehender Kernbrennstoff, kann mühelos unter Ausnutzung der Schwerkraft am geöffneten Ende des Hüllrohres ausgeschüttet und so vom Hüllrohr getrennt werden. Hierzu kann sogar auf das vorherige Zerlegen von abgebrannten Kernreaktorbrennelementen bzw. auf den vorherigen Ausbau der bestrahlten Brennstäbe aus solchen Kernreaktorbrennelementen verzichtet werden.

Der auf diese Weise aus dem Hüllrohr ausgetragene Kernbrennstoff enthält überhaupt keinen Hüllrohrwerkstoff und kann, insbesondere wenn es sich um keramischen Kernbrennstoff handelt, sehr klein gemahlen werden, wodurch die Löslichkeit dieses Kernbrennstoffes in einem Lösungsmittel und seine Förderbarkeit erheblich verbessert werden. Da sich kein Hüllrohrwerkstoff, also beispielsweise Zirkonium, im ausgetragenen Kernbrennstoff befindet, kann dieser zur weiteren Verbesserung der Löslichkeit im Lösungsmittel bei besonders hohen Temperaturen gelöst werden. In der Regel handelt es sich bei dem Hüllrohrwerkstoff um Metalle, wie z.B. Zirkoniumlegierungen, die bei besonders hohen Lösungsmitteltemperaturen – Lösungsmittel sind in der Regel Säuren, z.B. Salpetersäure – mit dem Lösungsmittel unter heftiger Bildung von störendem Wasserstoff reagieren würden. Ausserdem entfällt das Entzündungsrisiko der beim Zerkleinern der Hüllrohre entstehenden Späne.

Das entleerte Hüllrohr kann, falls es sich um einen bestrahlten Kernreaktorbrennstab gehandelt hat, flachgewalzt und mit anderen flachgewalzten Hüllrohren kompaktiert und so unter Volumenersparnis einer Endlagerung zugeführt werden. Während des Betriebes in einem Kernreaktor als Kernspaltprodukt entstehendes Tritium ist nach der genannten Wärmebehandlung in erhöhtem Masse in den beispielsweise aus Zirkonium bestehenden metallischen Werkstoff des Hüllrohres hineindiffundiert, d.h. befindet sich praktisch nicht im Kernbrennstoff eines bestrahlten Brennstabes, sondern im Werkstoff des Hüllrohres dieses bestrahlten Brennstabes und wird zusammen mit diesem problemlos endgelagert. Eine Beseitigung von Tritium aus dem aufgelösten Kernbrennstoff ist daher zumindest nicht im bisherigen Umfang erforderlich.

Von Vorteil ist es, wenn der aus dem Hüllrohr ausgetragene Kernbrennstoff in einem Autoklaven in Salpetersäure gelöst wird. In einem solchen Autoklaven gelingt auch das Auflösen von schwerlöslichen $(U/Pu)O_2$-Mischkristallen.

Enthält der Kernbrennstoff eines abgebrannten Kernreaktorbrennstabes sehr viel Ruthenium, Palladium und/oder Rhodium in Oxidform, wie dies im besonderen Masse beispielsweise in den Brennstäben abgebrannter Brennelemente von schnellen Brutreaktoren der Fall ist, so ist es zur Abtrennung dieser hochradioaktiven chemischen Edelmetallverbindungen vom gelösten Kernbrennstoff günstig, wenn der aus dem Hüllrohr ausgetragene Kernbrennstoff in Gegenwart sauerstoffhaltiger Atmosphäre im Autoklaven gelöst wird und wenn flüchtige Sauerstoffverbindungen insbesondere von Ruthenium und anderen Edelmetallen sowie von Spaltgasen aus der Atmosphäre im Autoklaven mit Hilfe einer Kühlfalle ausgeschieden werden.

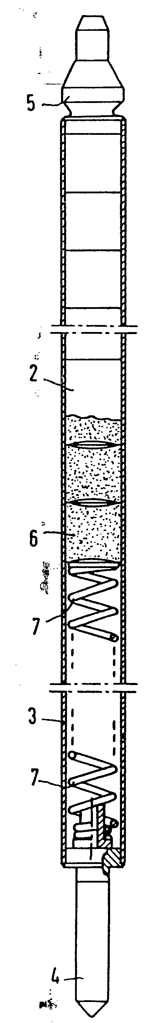

Die Erfindung und ihre Vorteile seien anhand der Zeichnung an einem Ausführungsbeispiel näher erläutert:

In der Zeichnung ist im Längsschnitt ein in einem Kernreaktor bestrahlter Kernreaktorbrennstab 2 dargestellt, welcher etwa 1500 mm lang ist und einen Durchmesser von ca. 14,5 mm hat. Dieser Brennstab 2 weist ein Hüllrohr 3 aus einer Zirkoniumlegierung (Zirkaloy) auf, welches eine Wandstärke von 0,6 mm hat. An beiden Enden ist dieses Hüllrohr 3 mit Endstopfen 4 und 5 verschlossen, die ebenfalls aus der Zirkoniumlegierung (Zirkaloy) bestehen und die mit dem Hüllrohr 3 verschweisst sind. Im Hüllrohr 2 befinden sich keramische Kernbrennstoffpellets 6, die im wesentlichen aus $(U/Pu)O_2$-Mischoxid bestehen. Sie enthalten ferner radioaktive Kernspaltprodukte. Ferner befindet sich im Hüllrohr 3 noch eine Spannfeder 7 aus Stahl. Schliesslich ist der Innenraum des gasdicht verschlossenen Hüllrohres 3 noch mit einem aus Helium bestehenden Schutzgas und gasförmigen Kernspaltprodukten aufgefüllt.

Zum Aufarbeiten des Brennstabes 2 wird dieser bei gasdicht verschlossenem Hüllrohr 3 in einem Muffelofen bei einer Temperatur von 1200°C drei Stunden lang erhitzt.

Dieses Erhitzen kann auch mittels elektrischen Stromes erfolgen, der das Hüllrohr 3 in Längsrichtung durchfliesst. Hierdurch weitet sich der Durchmesser des Hüllrohres 3 im Mittel um 10% ohne Rissbildung im Hüllrohr 3.

Anschliessend wird der Brennstab 2 dem Muffelofen entnommen. Nach dem Abkühlen auf Umgebungstemperatur von etwa 20°C ist das Hüllrohr 3 im Mittel auf einen bleibenden Durchmesser ohne Rissbildung geweitet, der etwa 10% grösser ist als der Ausgangsdurchmesser. Schliesslich wird die Endkappe 5 vom Hüllrohr 3 mit Hilfe eines Schneidwerkzeuges abgetrennt. Sodann werden die Kernbrennstoffpellets 6, deren Verbackungsstellen mit der Innenseite des Hüllrohres 3 durch das Weiten im Muffelofen gesprengt sind, aus dem Hüllrohr 3 mit Hilfe der Schwerkraft ausgeschüttet.

Diese Kernbrennstoffpellets 6 werden in einer Kugelmühle mechanisch zu Pulver zerkleinert, welches eine Korngrösse kleiner 400 μm hat. Anschliessend wird dieses Pulver zusammen mit Salpetersäure in einen Autoklaven eingefüllt, der dann mit reinem Sauerstoff gespült wird. Anschliessend wird der Gasraum in diesem Autoklaven mit reinem Sauerstoff von einem Druck von etwa 20 bar gefüllt und der Autoklav gasdicht verschlossen. Sodann wird die Salpetersäure im Autoklaven auf 220°C aufgeheizt und etwa 20 Stunden lang konstant gehalten. Hierbei stellt sich im Autoklaven ein Druck von etwa 64 bar ein.

Nach dem Erkalten des Autoklaven auf Umgebungstemperatur von etwa 20°C wird eine aus dem Autoklaven führende Entspannungsleitung geöffnet und die dem Autoklaven entströmende Atmosphäre über eine Kühlfalle geleitet, in der Sauerstoffverbindungen von Rhutenium und anderen Edelmetallen sowie Jod und Krypton abgeschieden werden. Die salpetersaure Kernbrennstofflösung wird schliesslich einem üblichen Verfahren zur Weiterverarbeitung zugeführt.

Das geweitete Hüllrohr 3 kann zunächst noch bis 0,5 Gewichtsprozent bestrahlten Kernbrennstoff enthalten, der vorteilhafterweise durch Vibration und Verformung (quetschendes Walzen) aus dem Hüllrohr 3 entfernt und der Auflösung in Salpetersäure im Autoklaven zugeführt wird. Es kann dann zusammen mit entleerten Hüllrohren anderer bestrahlter Brennstäbe unter erheblicher Volumenverminderung in günstiger Weise zu Würfeln oder Zylindern verpresst werden, die einer Endlagerung zugeführt werden.

**Patentansprüche**

1. Verfahren zum Aufarbeiten eines Kernreaktorbrennstabes, welcher Kernbrennstoff in einem Hüllrohr enthält, durch Entfernen des Hüllrohres vom Kernbrennstoff, dadurch gekennzeichnet, dass das Hüllrohr (3) in gasdicht verschlossenem Zustand zusammen mit dem in ihm befindlichen Kernbrennstoff (6) gleichmässig so stark aufgeheizt wird, dass sich der Durchmesser des Hüllrohres (3) unter Vergrössern des Abstandes zwischen dem Kernbrennstoff (6) und dem Hüllrohr (3) ohne Rissbildung im Hüllrohr (3) bleibend aufweitet, dass anschliessend das aufgeweitete Hüllrohr (3) an einem Ende geöffnet wird und dass schliesslich der Kernbrennstoff (6) aus dem geöffneten Hüllrohr (3) ausgetragen und vom Hüllrohr (3) getrennt weiterbehandelt wird.

2. Verfahren nach Anspruch 1, dadurch gekennzeichnet, dass der aus dem Hüllrohr (3) ausgetragene Kernbrennstoff (6) mechanisch zerkleinert wird.

3. Verfahren nach Anspruch 1 oder 2, dadurch gekennzeichnet, dass der aus dem Hüllrohr (3) ausgetragene Kernbrennstoff (6) in einem Autoklaven in Salpetersäure gelöst wird.

4. Verfahren nach Anspruch 3, dadurch gekennzeichnet, dass der aus dem Hüllrohr (3) ausgetragene Kernbrennstoff (6) in Gegenwart sauerstoffhaltiger Atmosphäre im Autoklaven gelöst wird und dass flüchtige Sauerstoffverbindungen von Ruthenium und anderen Edelmetallen sowie von Spaltgasen aus der Atmosphäre des Autoklaven mit Hilfe einer Kühlfalle ausgeschieden werden.

**Claims**

1. A method of decladding a nuclear fuel rod, which contains nuclear fuel in an encasing pipe, by removing the encasing pipe from the nuclear fuel, characterised in that in this gas-tight sealed state the encasing pipe (3) together with the nuclear fuel (6) contained therein is evenly heated to such an extent that the diameter of the encasing pipe (3) consistently expands by increasing the distance between the nuclear fuel (6) and the encasing pipe (3) without any formation of cracks in the encasing pipe (3), that the expanded encasing pipe (3) is subsequently opened at one end and that the nuclear fuel (6) is finally discharged from the opened encasing pipe (3) and further processed separately from the encasing pipe (3).

2. A method as claimed in claim 1, characterised in that the nuclear fuel (6) discharged from the encasing pipe (3) is mechanically disintegrated.

3. A method as claimed in claim 1 or 2, characterised in that the nuclear fuel (6) discharged from the encasing pipe (3) is dissolved in nitric acid in an autoclave.

4. A method as claimed in claim 3, characterised in that the nuclear fuel (6) discharged from the encasing pipe (3) is dissolved in the presence of an atmosphere which contains oxygen, in the autoclave, and that volatile oxygen compounds of ruthenium and other noble metals and fissionable gases are separated from the atmosphere of the autoclave with the aid of a cooling trap.

**Revendications**

1. Procédé de retraitement d'un crayon combustible de réacteur nucléaire, qui contient du combustible nucléaire dans une gaine, en enlevant la gaine du combustible nucléaire, caractérisé en ce que la gaine (3), à l'état fermé de manière étanche aux gaz, est chauffée uniformément, ensemble avec le combustible nucléaire (6) qui s'y trouve, si intensément, que le diamètre de la gaine (3) s'agrandit d'une manière permanente, avec augmentation de la distance entre le combustible nucléaire (6) et la gaine (3) et sans fissuration de cette dernière, en ce que l'on ouvre ensuite à une extrémité la gaine (3) élargie, et en ce que, enfin, on extrait le combustible nucléaire (6) de la gaine (3) ouverte et on continue à le traiter indépendamment de la gaine (3).

2. Procédé suivant la revendication 1, caractérisé en ce que le combustible nucléaire (6) extrait de la gaine (3) est fragmenté mécaniquement.

3. Procédé suivant la revendication 1 ou 2, caractérisé en ce que le combustible nucléaire (6) extrait de la gaine (3) est dissous dans l'acide nitrique, dans un autoclave.

4. Procédé suivant la revendication 3, caractérisé en ce que le combustible nucléaire (6) extrait de la gaine est dissous dans un autoclave en présence d'une atmosphère contenant de l'oxygène et en ce que des composés oxygénés volatils du ruthénium et d'autres métaux précieux, ainsi que de gaz de fission, sont séparés de l'atmosphère de l'autoclave à l'aide d'un piège cryogénique.

0 100 941